# EUROPÄISCHE PATENTSCHRIFT

(11) **EP 1 231 692 B1**
(45) Veröffentlichungstag und Bekanntmachung des Hinweises auf die Patenterteilung: **13.07.2005**
(21) Anmeldenummer: 02002430.3
(22) Anmeldetag: 01.02.2002
(51) Int. Cl.: H02G 1/12

(54) **Einrichtung zum Abisolieren eines mehradrigen Kabels**
Device for stripping a multiwire cable
Dispositif pour dénuder un câble multibrin

(30) Priorität: 13.02.2001 EP 01810146
(43) Veröffentlichungstag der Anmeldung: 14.08.2002
(73) Patentinhaber: KOMAX HOLDING AG, 6036 Dierikon (CH)
(72) Erfinder: Thoms, Karin, Dipl.-Ing., 6370 Stans (CH); Mehri, Urs, Dipl.-Ing., 6370 Stans (CH)
(74) Vertreter: Blöchle, Hans

(56) Entgegenhaltungen:
- WO-A-99/52188
- FR-A- 2 167 417
- US-A- 3 003 375
- US-A- 4 283 971

## Beschreibung

Die Erfindung betrifft eine Einrichtung zum Abisolieren eines mehradrigen Kabels, wobei eine Transporteinheit zum Transport des Kabels in kabelachsialer Richtung, ein Messer zur Abmantelung des Kabels und ein weiteres Messer zur Abisolierung der entdrillten Kabeladern vorgesehen ist, wobei ein Separator vorgesehen ist, der mit quer zur Kabelachsrichtung wirkenden Bewegungen bzw. Kräften die Kabeladern entdrillt und parallel orientiert. Desweiteren betrifft die Erfindung ein Verfahren nach dem Oberbegriff des Anspruchs 4.

Aus der Schrift WO99/52188 ist eine Abisoliervorrichtung für mehradrige Kabel bekannt geworden. Die Kabeladern werden mechanisch durch eine streifende Bewegung entdrillt und parallel zueinander orientiert, bevor die Kabeladern mittels eines Mehrfachmessers abisoliert werden. Die streifende Bewegung und die parallele Orientierung wird mittels federbeaufschlagbaren, einander gegenüberliegenden Backen erreicht, wobei die Backen als gefederte Gleitstücke wirken. Die Kabeladern führen gegenüber den Gleitstücken eine Relativbewegung aus, wobei die verdrillten Kabeladern vor dem Abisolieren separiert und parallel orientiert werden.

Ein Nachteil der bekannten Einrichtung liegt darin, dass durch die streifende Bewegung Kräfte in Kabelachsrichtung auf die Isolation der Kabeladern wirken, welche Kräfte die Isolation leicht dehnen. Nach dem Abisolieren kann sich die Isolation wieder zusammenziehen, was zu grosse, materialabhängige Abisolierlängen zur Folge hat.

Aus der Schrift FR 2 167 417 ist ein Separator bekannt geworden, der quer zur Kabelachsrichtung wirkende Bewegungen zum Entdrillen und parallel Orientieren von Kabeladern ausführt. Zwei entlang einer Schräge bewegliche Platten, die auf die zu entdrillenden Kabeladern mit einer gegenläufigen Bewegung einwirken, sind in Querrichtung federbeaufschlagt.

Nachteilig bei dieser Einrichtung ist, dass die Isolation der Kabeladern in Kabelachsrichtung fest eingespannt ist und sich der Isolationsanschnitt nach dem Abisolieren verschieben kann.

Hier will die Erfindung Abhilfe schaffen. Die Erfindung, wie sie in Anspruch 1 oder 4 gekennzeichnet ist, löst die Aufgabe, die Nachteile der bekannten Einrichtung zu vermeiden und eine Einrichtung zu schaffen, mittels der Kabeladern eines Kabels problemlos entdrillbar und orientierbar sind.

Die durch die Erfindung erreichten Vorteile sind im wesentlichen darin zu sehen, dass die elastische Isolation beim Entdrillen der Kabeladern nicht gedehnt wird. Die Abisolierlänge der Kabeladern verändert sich nach dem Entdrillen nicht. Die beim Abisolieren vorgegebene Abisolierlänge der Kabeladern bleibt erhalten. Ausserdem sind kürzere Abmantellängen realisierbar, weil die Isolation nicht gedehnt wird.

Anhand der beiliegenden Figuren wird die vorliegende Erfindung näher erläutert.

Es zeigen:
Fig. 1
   eine Einrichtung zum Abisolieren eines Kabels mit mehreren Kabeladern,
Fig. 2 und Fig. 3
   die Abmantelung des Kabels,
Fig. 4
   einen Separator in Offenstellung zur Entdrillung der Kabeladern,
Fig. 5
   den Separator in Geschlossenstellung,
Fig. 6
   den Separator in Geschlossenstellung mit einem Formmesser,
Fig. 7
   den Separator mit dem Formmesser in Offenstellung und

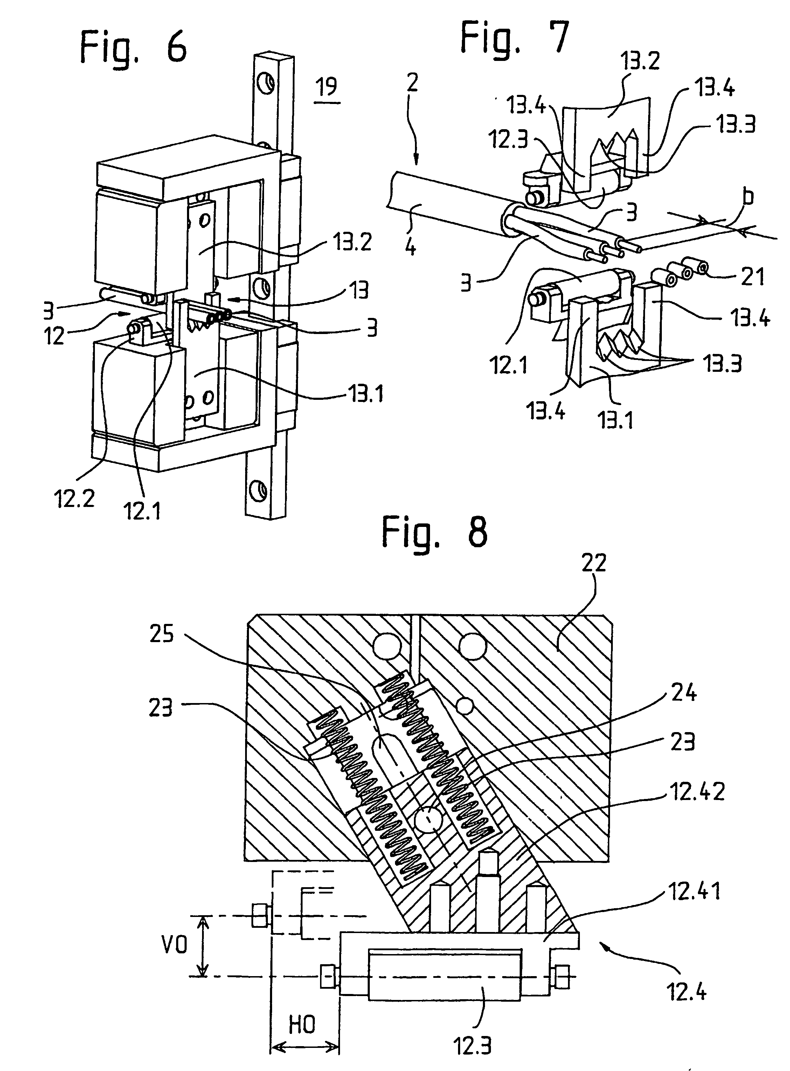

Fig. 8 Einzelheiten des Separators.

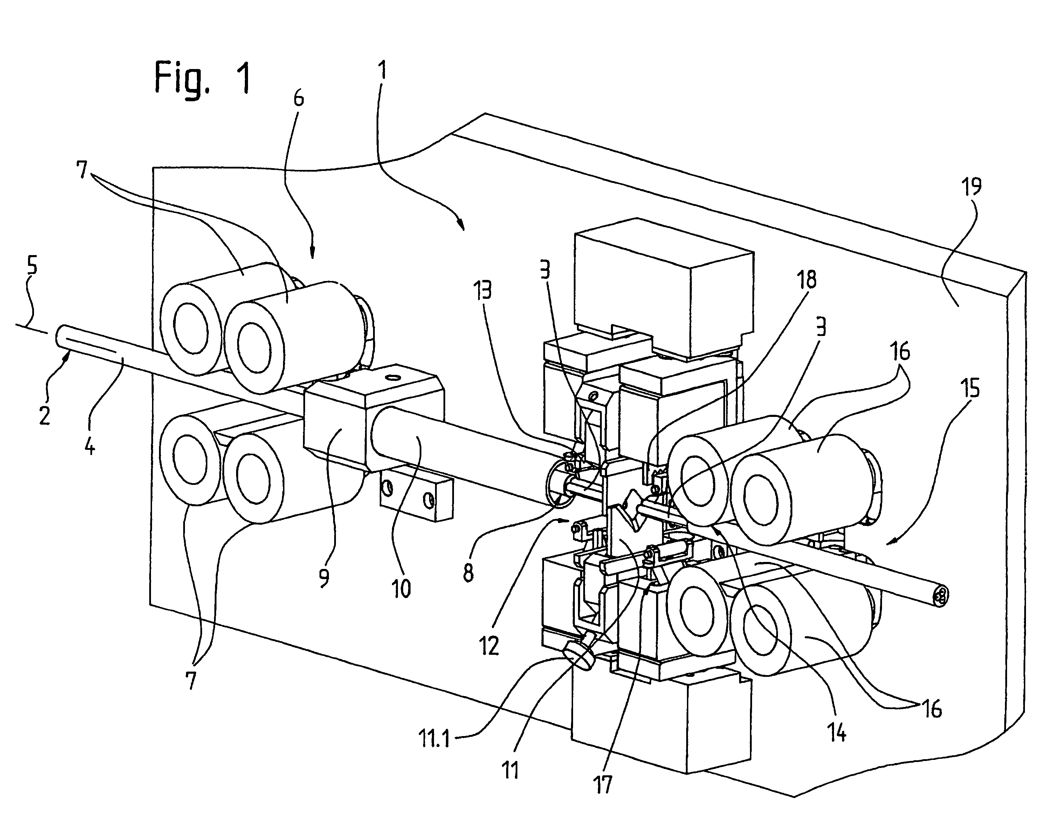

Fig. 1 zeigt eine Abisoliereinrichtung 1 für die Abisolierung eines Kabels 2 mit mehreren Kabeladern 3. Üblicherweise sind die Kabeladern 3 verdrillt und von einem Kabelmantel 4 umhüllt. Mit 5 ist eine Kabelachse bezeichnet.

Das Kabel 2 ist mittels einer ersten Transporteinheit 6 vorschiebbar und rückziehbar, wobei obere und untere antreibbare Rollenpaare 7 die Bewegung des Kabels 2 bewirken. Der Kabelanfang 8 wird in einem mittels Schwenkmechanismus 9 schwenkbaren Führungsrohr 10 bis zu einem Trennmesser 11 vorgeschoben, wobei das Trennmesser 11 zum Durchtrennen des Kabels 2 und zum Abmanteln des Kabels 2 vorgesehen ist. Eine Stellschraube 11.1 ermöglicht einen Schnellwechsel des Messerblockes mit dem Trennmesser 11. Zwischen dem Ende des Führungsrohres 10 und dem Trennmesser 11 ist ein erster Separator 12 zur Entdrillung der Kabeladern 3 und ein erstes Formmesser 13 zur Abisolierung der Kabeladern 3 angeordnet.

Zur Bearbeitung des Kabelendes 14 ist das Kabel 2 mittels einer zweiten Transporteinheit 15 vorschiebbar und rückziehbar, wobei obere und untere antreibbare Rollenpaare 16 die Bewegung des Kabels 2 bewirken. Zwischen der Transporteinheit 15 und dem Trennmesser 11 ist ein zweiter Separator 17 zur Entdrillung der Kabeladern 3 und ein zweites Formmesser 18 zur Abisolierung der Kabeladern 3 angeordnet. Ein Trennmesser 11 oder Formmesser 13,18 umfasst ein Messerpaar (oberes und unteres Messer).

Die Transporteinheiten 6,15, der Schwenkmechanismus 9, die Messer 11,13,18 und die Separatoren 12,17 sind an einer Konsole 19 angeordnet.

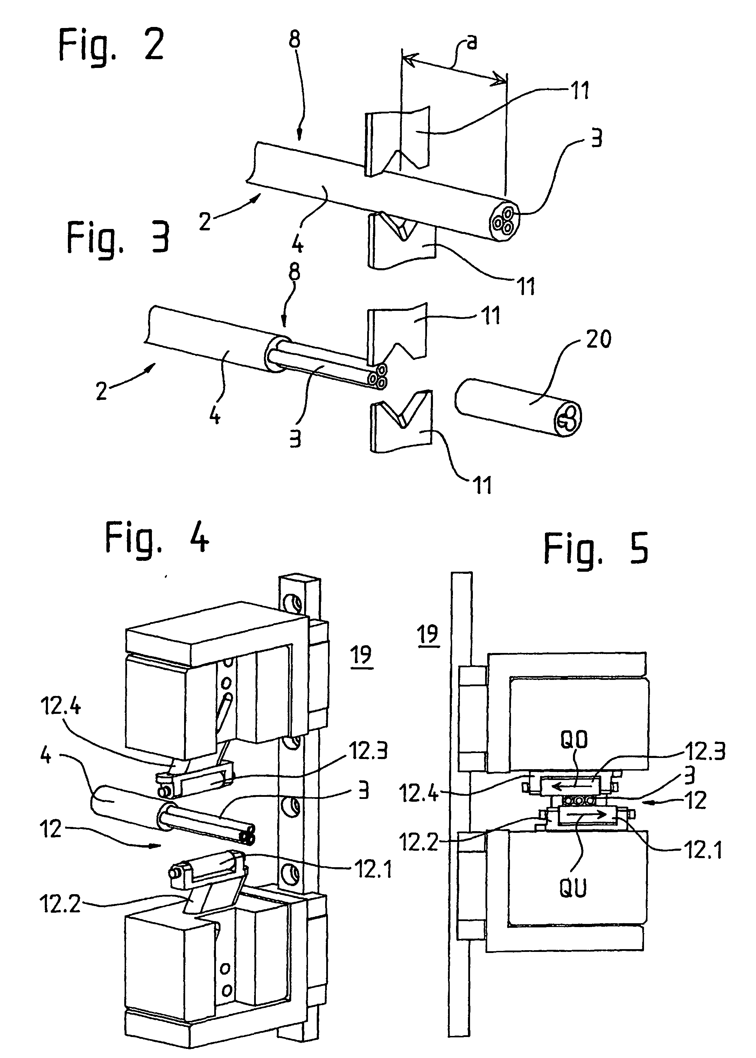

Fig. 2 zeigt den Kabelanfang 8 nach der Trennung des Kabels 2 durch das Trennmesser 11. Das vorangehende Kabelende 14 ist nicht dargestellt. Zur Abmantelung wird das Kabel 2 um die Abmantellänge a mittels der ersten Transporteinheit 6 vorgeschoben. Danach wird das aus zwei Hälften bestehende Trennmesser 11 so zugestellt, dass der Kabelmantel 4 eingeschnitten wird. Dann zieht die erste Transporteinheit 6 das Kabel 2 zurück, wobei wie in Fig. 3 gezeigt ein Mantelrest 20 abgestossen wird. Die Kabeladern 3 sind nun frei aber noch verdrillt. Die Bearbeitung des Kabelendes 14 erfolgt sinngemäss der Bearbeitung des Kabelanfangs 8.

Fig. 4 zeigt den ersten Separator 12 ohne erstes Formmesser 13 in Offenstellung. Der Separator 12 besteht aus einer unteren frei drehbaren Walze 12.1, die von einer unteren Walzenkonsole 12.2 getragen wird und aus einer oberen frei drehbaren Walze 12.3, die von einer oberen Walzenkonsole 12.4 getragen wird. Die Walzenkonsolen 12.2,12.4 sind in vertikaler Richtung federbeaufschlagt ausgefahren.

Fig. 5 zeigt den ersten Separator 12 in Geschlossenstellung. Die Walzenkonsolen 12.2,12.4 sind in vertikaler Richtung federbeaufschlagt eingefahren. Beim Zustellen des ersten Separators 12 ist das Kabel 2 in kabelachsialer Richtung so positioniert, dass die Kabeladern 3 nahe beim Kabelmantelende zwischen die untere Walze 12.1 und die obere Walze 12.3 zu liegen kommen, wobei die untere Walze 12.1 eine Bewegung QU quer zur Kabelachse 5, beispielsweise von der Konsole 19 weg und die obere Walze 12.3 eine Bewegung QO quer zur Kabelachse 5, beispielsweise in Richtung Konsole 19 ausführen. Nach der Querbewegung QU,QO der Walzen 12.1,12.3 wird der Separator 12 geöffnet und das Kabel 2 beispielsweise um einen Drittel der freien Kabeladerlänge zurückgezogen und die Querbewegungen QU,QO erneut auf die Kabeladern 3 angewendet. Der vorangehende Schritt kann je nach Verdrillung wiederholt werden, indem der Separator 12 geöffnet wird und das Kabel um einen weiteren Drittel zurückgezogen wird und die Querbewegungen QU,QO erneut auf die Kabeladern 3 angewendet werden. Mit der schrittweisen Anwendung der Querbewegungen QU,QO bzw. Kräfte auf die Kabeladern 3 können stärker verdrillte Kabaladern entdrillt werden. Bei schwacher Verdrillung genügt eine einmalige Anwendung der Querbewegungen QU,QO zur Entdrillung und parallelen Orientierung der Kabeladern 3. Die Entdrillung kann auch ohne Kabeltransport lediglich durch mehrmaliges Schliessen und Öffnen des Separators 12 erfolgen.

Fig. 5 und Fig. 7 zeigen die parallele Orientierung der Kabeladern 3. Wegen den frei drehbaren Walzen 12.1,12.3 wirken beim Abisolieren der Kabeladern 3 in Kabelachsrichtung praktisch keine Kräfte auf die Isolation der Kabeladern 3 ein. Nach dem Abisolieren der Kabeladern 3 bleibt die Abisolierlänge erhalten.

Fig. 6 zeigt den Separator 12 in Geschlossenstellung mit dem Formmesser 13 beim Einschneiden der Aderisolation. Das Formmesser 13 weist ein unteres Messer 13.1 und ein oberes Messer 13.2 auf, wobei die Messer 13.1, 13.2 eine der Anzahl Kabeladern 3 entsprechende Anzahl Schneidformen 13.3 aufweisen. Seitlich der Schneidformen 13.3 angeordnete Schenkel 13.4 begrenzen beim Entdrillen die Querbewegung der Kabeladern 3. Nach dem Einschneiden der Aderisolation wird das Kabel 2 mittels der ersten Transporteinheit 6 zurückgezogen und wie in Fig. 7 gezeigt der Separator 12 mit dem Formmesser 13 geöffnet. Die vorgegebene Abisolierlänge ist mit b und die Isolationsreste sind mit 21 bezeichnet.

Der Separator 12,17 kann vom Formmesser 13 angetrieben sein oder einen eigenen Antrieb aufweisen.

Die Entdrillung, parallele Orientierung und Abisolierung der Kabeladern 3 des Kabelendes 14 erfolgt sinngemäss der Bearbeitung des Kabelanfangs 8.

Fig. 8 zeigt Einzelheiten der oberen Walzenkonsole 12.4 des Separators 12. Die Walzenkonsole 12.4 besteht aus einem die obere Walze 12.3 tragenden Walzenträger 12.41 und aus einem Gleitstück 12.42, welches Gleitstück 12.42 verschiebbar in einem Gehäuse 22 angeordnet ist. Das Gleitstück 12.42 ist mittels einer von Druckfedern 23 ausgehenden Federkraft beaufschlagt. Ein Bolzen 24 des Gleitstückes 12.42 greift in einen Langschlitz 25 des Gehäuses 22 ein, wobei der Bolzen 24 an den Enden des Langschlitzes 25 wegbegrenzend ist.

In Fig. 8 ist mit ausgezogener Linie die Walzenkonsole 12.4 in vertikaler Richtung ausgefahren gezeigt und mit unterbrochener Linie in vertikaler Richtung eingefahren gezeigt. Der maximal mögliche Hub der Walze 12.3 ist mit VO bezeichnet. Wegen der geneigten Anordnung des Gleitstückes 12.42 führt die Walze 12.3 auch eine Bewegung in horizontaler Richtung aus. Die maximal mögliche Bewegung in horizontaler Richtung ist mit HO bezeichnet. Wie weiter oben erläutert, dient die Bewegung in horizontaler Richtung der Entdrillung der Kabeladern 3.

Funktion und Aufbau der unteren Walzenkonsole 12.2 sind sinngemäss der oberen Walzenkonsole 12.4.

## Patentansprüche

1. Einrichtung zum Abisolieren eines mehradrigen Kabels, wobei eine Transporteinheit zum Transport des Kabels in kabelachsialer Richtung, ein Messer zur Abmantelung des Kabels und ein weiteres Messer zur Abisolierung der entdrillten Kabeladern vorgesehen ist, wobei ein Separator (12,17) vorgesehen ist, der mit quer zur Kabelachsrichtung wirkenden Bewegungen (QU,QO) bzw. Kräften die Kabeladern (3) entdrillt und parallel orientiert,
**dadurch gekennzeichnet,**
**dass** der Separator (12,17) mit einer unteren frei drehbaren Walze (12.1) und einer oberen frei drehbaren Walze (12.3) quer zur Kabelachsrichtung auf die Kabeladern (3) einwirkt, wobei die Kabeladern (3) ohne in Kabelachsrichtung auf die Isolation der Kabeladern (3) wirkende, vom Separator ausgehende Kräfte entdrillbar und abisolierbar sind.

2. Einrichtung nach Anspruch 1,
**dadurch gekennzeichnet,**
**dass** der Separator (12,17) eine untere Walzenkonsole (12.2) mit Walze (12.1) und eine obere Walzenkonsole (12.4) mit Walze (12.3) aufweist, wobei die Walzenkonsolen (12.2,12.4) die quer zur Kabelachsrichtung wirkenden Bewegungen (QU,QO) erzeugen und die Bewegungen gegenläufig sind.

3. Einrichtung nach Anspruch 2,
**dadurch gekennzeichnet,**
**dass** zur Erzeugung der Querbewegungen federbeaufschlagte Gleitstücke (12.42) in geneigter Anordnung vorgesehen sind, wobei die Querbewegungen mittels der Walzen (12.1,12.3) auf die Kabeladern (3) übertragbar sind.

4. Verfahren zum Abisolieren eines mehradrigen Kabels, das mittels einer Transporteinheit in Kabelachsrichtung vorschiebbar und rückziehbar ist, wobei ein Messer den Kabelmantel und ein weiteres Messer die Isolation der entdrillten Kabeladern entfernt, wobei der Abisolierung der Kabeladern (3) vorangehend die Kabeladern (3) mittels eines separators mit quer zur Kabelachsrichtung wirkenden Bewegungen (QU,QO) bzw. Kräften entdrillt und parallel orientiert werden,
**dadurch gekennzeichnet,**
**dass** während der Entdrillung und Abisolierung der Kabeladern (3) die Isolation der Kabeladern (3) in Kabelachsrichtung mittels der Transporteinheit durch eine untere und obere quer zur Kabelachsrichtung liegende frei drehbare Walzen des Separators frei bewegbar ist.

5. Verfahren nach Anspruch 4,
**dadurch gekennzeichnet,**
**dass** die Bewegungen (QU,QO) schrittweise auf die Kabeladern (3) angewendet werden.

## Claims

1. Equipment for stripping a multi-core cable, wherein a transport unit for transport of the cable in the axial direction of the cable, a knife for desheathing the cable and a further knife for stripping the untwisted cable cores are provided, wherein a separator (12, 17) is provided, which untwists the cable cores (3), and orients them to be parallel, by movements (QU, QO) or forces acting transversely relative to the cable axial direction, **characterised in that** the separator (12, 17) acts on the cable cores (3) transversely to the cable axial direction by a lower freely rotatable roller (12.1) and an upper freely rotatable roller (12.3), wherein the cable cores (3) can be untwisted and stripped without forces which emanate from the separator and act in cable axial direction on the insulation of the cable cores (3)

2. Equipment according to claim 1, **characterised in that** the separator (12, 17) comprises a lower roller mount (12 2) with roller (12.1) and an upper roller mount (12.4) with roller (12.3), wherein the roller mounts (12.2, 12 4) produce the movements (QU, QO) acting transversely to the cable axial direction, wherein the movements are in opposite sense.

3. Equipment according to claim 2, **characterised in that** spring-loaded slide members (12.42) in inclined arrangement are provided for producing the transverse movements, wherein the transverse movements can be transmitted to the cable cores (3) by means of the rollers (12.1, 12 3).

4. Method for stripping a multi-core cable, which can be advanced and drawn back in cable axial direction by means of a transport unit, wherein a knife removes the cable sheath and a further knife removes the insulation of the untwisted cable cores, wherein prior to stripping the cable cores (3) the cable cores (3) are untwisted and oriented to be parallel by means of a separator by movement (QU, QO) or forces acting transversely to the cable axial direction, **characterised in that** during the untwisting and stripping of the cable cores (3) the insulation of the cable cores (3) is freely movable in cable axial direction by means of the transport unit by a lower and an upper, freely rotatable roller, which lies transversely to the cable axial direction, of the separator.

5. Method according to claim 4, **characterised in that** the movements (QU, QO) are applied in stepwise manner to the cable cores (3).

## Revendications

1. Dispositif pour dénuder un câble multiple, dans lequel sont prévus une unité de transport pour le transport du câble dans le sens axial de celui-ci, une lame pour dénuder le câble et une autre lame pour dénuder les conducteurs détordus, ainsi qu'un séparateur (12, 17) qui, avec des déplacements (QU, QO) ou des forces agissant transversalement par rapport au sens axial du câble, détord les conducteurs (3) et les oriente parallèlement,
**caractérisé en ce que** le séparateur (12, 17) agit sur les conducteurs transversalement par rapport au sens axial du câble grâce à un rouleau inférieur apte à tourner librement (12.1) et à un rouleau supérieur apte à tourner librement (12.3), les conducteurs (3) étant aptes à être détordus et dénudés sans que des forces provenant du séparateur agissent sur leur isolation dans le sens axial du câble.

2. Dispositif selon la revendication 1, **caractérisé en ce que** le séparateur (12, 17) comporte une console de rouleau inférieure (12.2) avec un rouleau (12.1), et une console de rouleau supérieure (12.4) avec un rouleau (12.3), les consoles de rouleaux (12.2, 12.4) produisant les mouvements (QU, QO) qui agissent transversalement par rapport au sens axial du câble, et ces mouvements étant opposés.

3. Dispositif selon la revendication 2, **caractérisé ce qu'**il est prévu, pour produire les mouvements transversaux, des coulisseaux (12.42) inclinés qui sont contraints par ressort, ces mouvements transversaux pouvant être transmis aux conducteurs (3) grâce aux rouleaux (12.1, 12.3).

4. Procédé pour dénuder un câble multiple qui est apte à être avancé et rétracté dans le sens axial du câble à l'aide d'une unité de transport, selon lequel une lame enlève la gaine du câble et une autre lame enlève l'isolation des conducteurs détordus, et avant d'être dénudés, les conducteurs (3) sont détordus et orientés parallèlement à l'aide d'un séparateur, grâce à des mouvements (QU, QO) ou des forces agissant transversalement par rapport au sens axial du câble,
**caractérisé en ce que** pendant la détorsion et le dénudage des conducteurs (3), l'isolation des conducteurs (3) est apte à être déplacée librement dans le sens axial du câble à l'aide de l'unité de transport, grâce à des rouleaux inférieur et supérieur du séparateur qui sont disposés transversalement par rapport au sens axial du câble et qui sont aptes à tourner librement.

5. Procédé selon la revendication 4, **caractérisé en ce que** les mouvements (QU, QO) sont appliqués sur les conducteurs (3) progressivement.
